# EUROPEAN PATENT APPLICATION

(11) **EP 1 197 248 A2**
(43) Date of publication of application: **17.04.2002**
(21) Application number: 01123670.0
(22) Date of filing: 02.10.2001
(51) Int. Cl.: A63C 17/00

(54) **Rollbrett**

(30) Priority: 13.10.2000 DE 20017582 U
(71) Applicant: Prototec Aktiengesellschaft, 9490 Vaduz (LI)
(72) Inventor: Ahlbäumer, Georg, Dr., 7500 Sankt Moritz (CH)
(74) Representative: Grünecker, Kinkeldey, Stockmair & Schwanhäusser Anwaltssozietät

(57) **Zusammenfassung**

Rollbrett, insbesondere Tretroller oder Skateboard, mit einem Trittbrett und mindestens einer Vorderachse und mindestens einer Hinterachse, an denen jeweils mindestens ein Rad drehbar gelagert ist, mindestens einem Federelement zum Abfedern von Kräften, die zwischen der mindestens einen Vorderachse oder der mindestens einen Hinterachse und dem Trittbrett wirken, wobei das Federelement aus einem elastisch verformbaren Kunststoffteil besteht.

## Description

Die vorliegende Erfindung betrifft ein Rollbrett und betrifft insbesondere einen Tretroller oder ein Skateboard.

Tretroller erfreuen sich in den letzten Jahren wieder zunehmender Popularität und werden sowohl im Freizeitbereich als auch als Verkehrsmittel im täglichen Leben eingesetzt. Entsprechendes gilt für Skateboards, wobei hier jedoch ein Schwerpunkt in der Nutzung als Freizeit- bzw. Sportgerät liegt.

Die erwähnten Rollbretter in einer Ausführung als Tretroller werden insbesondere mit einer klappbaren Lenkstange angeboten, wobei das sog. Kickboard einen bekannter Vertreter dieser Gattung darstellt.

Insbesondere im Tretrollerbereich ist bereits vorgeschlagen worden, Federelemente vorzusehen, durch die Fahrbahnunebenheiten ausgeglichen werden können. Insbesondere wurden Federelemente innerhalb der Lenkstange vorgeschlagen.

Ausgehend von dem bekannten Stand der Technik ist es die Aufgabe der vorliegenden Erfindung, ein Rollbrett anzugeben, das über Federelemente verfügt, wobei die Federelemente in optimaler Weise an die Fahrsituationen von Rollbrettern angepasst sind und trotz geringer Herstellungskosten eine ausreichende Robustheit aufweisen.

Diese Aufgabe wird gelöst durch ein Rollbrett, insbesondere Tretroller oder Skateboard, mit einem Trittbrett und mindestens einer Vorderachse und mindestens einer Hinterachse, an denen jeweils mindestens ein Rad drehbar gelagert ist, mindestens einem Federelement zum Abfedern von Kräften, die zwischen der mindestens einen Vorderachse oder der mindestens einen Hinterachse und dem Trittbrett wirken, wobei das Federelement aus einem elastisch verformbaren Kunststoffteil besteht.

Durch elastisch verformbare Kunststoffteile wird ein kostengünstiges, leichtes und robustes Federelement geschaffen. Bei dem elastisch verformbaren Kunststoffteil kann es sich insbesondere um ein Elastomer handeln. Weiterhin kann es sich insbesondere um einen geschlossenporigen Kunststoffschaum handeln, wobei es sich insbesondere als zweckmäßig erwiesen hat, einen PUR-Schaum zu verwenden. Gechlossenporiger Kunststoffschaum weist eine stark progressive Federkennlinie auf und verfügt über wirkungsvolle Dämpfungseigenschaften. Je nach Auslegung der Federung in bezug auf das Körpergewicht eines Benutzers kann ein geeignetes spezifisches Gewicht für den Kunststoffschaum vorgesehen werden. Für einen PUR-Schaum kann als Anhaltspunkt für eine entsprechende Optimierung des spezifischen Gewichts und damit der Federungs- und Dämpfungseigenschaften ein spezifisches Gewicht von etwa 600 bis 650 g/dm³ (600 bis 650 g/l) angegeben werden.

Bevorzugte Ausführungsformen sind Gegenstand der Unteransprüche.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 eine schematische Darstellung einer bevorzugten Ausführungsform eines erfindungsgemäßen Rollbretts,
Fig. 2 eine schematische Seitenansicht einer bevorzugten Ausführungsform eines Befestigungskörpers mit einem zweigeteilten Federelement pro Radachse,
Fig. 3 eine schematische Frontansicht des Befestigungskörpers gemäß Fig. 2
Fig. 4 eine schematische Schnittansicht durch das zylindrisch ausgebildete Federelement der Fig. 2 und 3, und
Fig. 5 eine schematische Frontansicht einer weiteren bevorzugten Ausführungsform eines Befestigungskörpers.

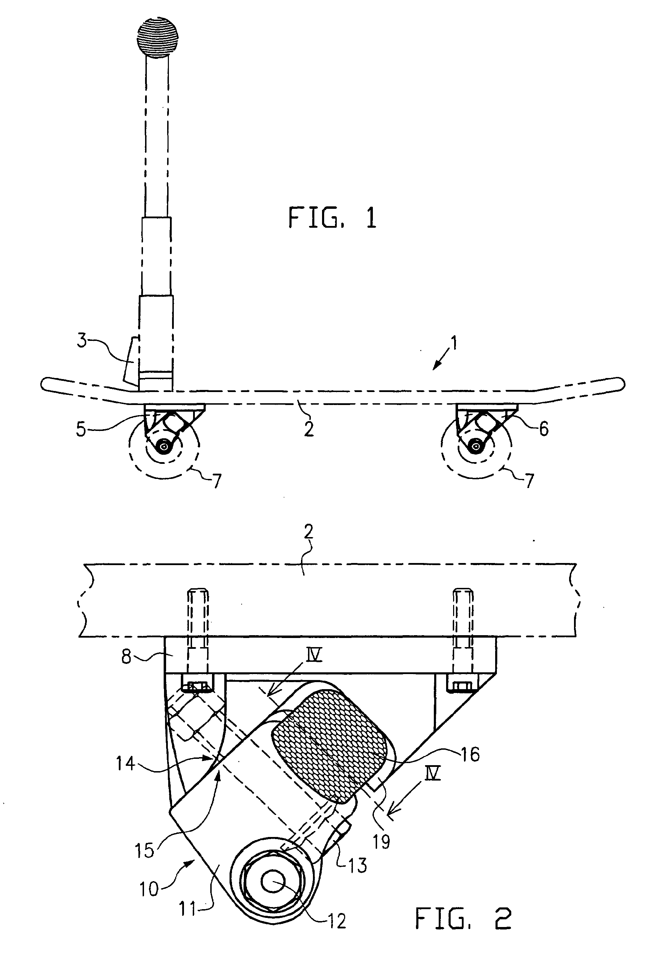

Fig. 1 zeigt eine bevorzugte Ausführungsform des erfindungsgemäßen Rollbretts in Form eines Tretrollers. Der Tretroller 1 weist ein Trittbrett 2 auf, an das eine vorzugsweise um ein Gelenk 3 klappbare Lenkstange 4 befestigt ist.

Auf der Unterseite des Trittbretts 2 sind im vorderen und hinteren Bereich Befestigungskörper 5 und 6 vorgesehen, von denen einer in detaillierterer Weise in Fig. 2 dargestellt ist.

An den Befestigungskörpern 5, 6 sind jeweils Räder 7 drehbar gelagert befestigt, wobei vorzugsweise pro Achse zwei Räder vorgesehen sind.

Jeder Befestigungskörper 5, 6 weist im wesentlichen drei Grundkomponenten auf, wie dies durch Fig. 2 näher erläutert wird. Zum einen ist ein Lagerkörper 8 vorgesehen, welcher starr mit dem Trittbrett 2 verbunden ist. Der Lagerkörper 8 kann dabei ein integrales Teil des Trittbretts darstellen oder mit diesem verschraubt sein. Insbesondere kann er als Lagerbock oder Lagerplatte ausgeführt sein. Vorzugsweise wird der Lagerkörper auf der Unterseite des Trittbretts angeordnet sein, jedoch sind auch Lösungen möglich, bei denen der Lagerkörper über geeignete Befestigungselemente an einer anderen Stelle als unterhalb des Trittbretts befestigt ist.

Darüber hinaus weist der Befestigungskörper 8 einen Achskörper 10 auf, der aus einem Achslagerteil 11 und einer Achse 12 besteht.

Der Lagerkörper 8 und der Achskörper 10 sind miteinander verbunden und gegeneinander um eine Drehachse drehbar gelagert. Die Drehachse 13 wird vorzugsweise durch eine den Achskörper und den Lagerkörper durchdringende Schraube 9 gebildet. Wie in Fig. 2 dargestellt, weisen Lagerkörper und Achskörper jeweils eine Gleitfläche 14 bzw. 15 auf, die bei einer Drehung zwischen Lagerkörper und Achskörper aufeinander gleiten. Die Gleitflächen 14 bzw. 15 stehen dabei senkrecht auf der Drehachse 13. Die Drehachse 13 bildet wiederum einen Winkel von vorzugsweise 45° bezüglich der Trittbrettfläche.

Zwischen Lagerkörper 8 und Achskörper 10 ist ein elastisch verformbares Kunststoffteil 16 eingefügt, bei dem es sich vorzugsweise um einen Elastomer handelt.

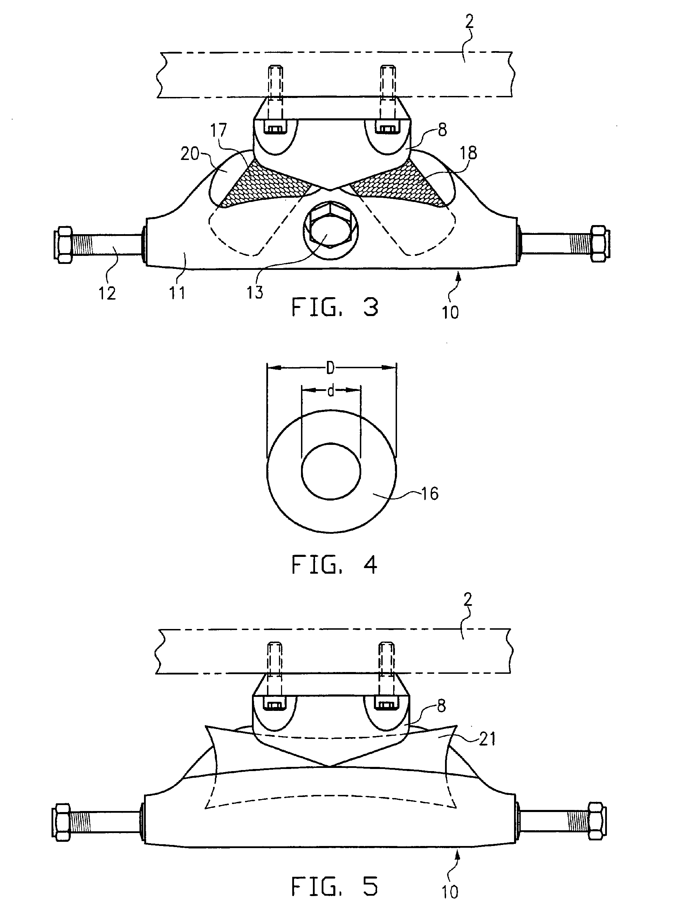

Wie Fig. 3 zeigt, ist das elastisch verformbare Kunststoffteil in der bevorzugten Ausführungsform zweiteilig ausgebildet, wobei die zwei Teile vorzugsweise aus je einem zylinderförmigen Element 17 bzw. 18 bestehen. Die zylinderförmigen Elemente 17, 18 stehen zueinander in V-Ausrichtung, wobei sich die weiter voneinander beabstandeten Endpunkte sich auf dem Achskörper 10 abstützen.

Vorzugsweise weisen die zylinderförmigen Elemente 17, 18 eine Bohrung auf, durch die die letztendlich wirkende Federkonstante leicht definiert werden kann. Die entsprechende Bohrung ist in Fig. 4 gezeigt. Der eingezeichnete Aussendruchmesser D beträgt vorzugsweise zwischen 15 und 25 mm, der Innendurchmesser d zwischen 6 und 9 mm.

Wie anhand der Fig. 3 ersichtlich ist, wird über die symmetrische Ausrichtung der zylinderförmigen Elemente 17, 18 eine zum Achsmittelpunkt symmetrische Verteilung des elastisch verformbaren Kunststoffes erreicht, wodurch sich ein bezüglich der Räder symmetrisches Dämpfungsverhalten ergibt.

Die zylindrisch ausgeformten Federelemente 17, 18 ragen mit ihren Enden jeweils in Aussparungen 19 bzw. 20 innerhalb des Lagerkörpers bzw. Achskörpers hinein. Ersichtlicherweise steht die durch die zylindrischen Elemente definierte Ebene senkrecht auf der Drehachse 13. Anhand der Fig. 2 ist ersichtlich, dass die durch die Federelemente aufgespannte Ebene unter einem 45° Winkel zum Trittbrett 2 steht.

Vorzugsweise werden das elastisch verformbare Kunststoffteil 16 und insbesondere die beiden zylinderförmigen Elemente 17, 18 unter Vorspannung zwischen dem Lagerkörper und dem Achskörper gehalten. Diese Vorspannung lässt sich erzielen, indem der Abstand zwischen den Abstützflächen innerhalb der Aussparungen 19, 20 kürzer bemessen ist als die ungestauchte Länge der zylinderförmigen Elemente 17, 18. Das bedeutet, dass beim Zusammenschrauben des Lagerkörpers 8 mit dem Achskörper 10 das elastisch verformbare Kunststoffteil unter Spannung zwischen die Aussparungen 19 und 20 geklemmt wird und über die in Achsrichtung starre Verbindung zwischen Achskörper 10 und Lagerkörper 8 gehalten wird.

Fig. 5 zeigt eine Ausführungsform, die gegenüber der Ausführungsform nach Fig. 3 dadurch abweicht, dass das elastisch verformbare Kunststoffteil 16 einstückig ausgeführt ist und wiederum eine Form aufweist, die bezüglich des Mittelpunktes der Radachse symmetrisch ist. Wie in Fig. 5 gezeigt, weist ein solches einstückiges elastisches verformbares Kunststoffteil vorzugsweise wiederum die Form eines Zylinders 21 auf, wobei zur Erzielung einer symmetrischen Verteilung die Zylinderachse parallel zur Radachse verläuft. Gemäß einer bevorzugten Ausführungsform kann der Zylinder entlang seiner Mantelfläche konkav ausgebildet sein, wie dies in Fig. 5 angedeutet ist.

Bei einer weiteren bevorzugten Weiterbildung des erfindungsgemäßen Rollbretts werden Räder mit erhöhtem Durchmesser eingesetzt, die entlang ihres Umfanges aus einem Material bestehen, das dämpfend wirkt.

Anhand der Fig. 2 und 3 ist ersichtlich, dass bei der dortigen Ausführungsform Kräfte, die senkrecht und mittig zur Trittbrettfläche wirken, nicht gedämpft werden. Durch Verwendung der erwähnten großen Räder kann die Dämpfung in vertikaler Richtung entlang der Trittbrettmitte über geeignete Dimensionierung und Materialien abgestimmt werden, so dass das Rollbrett über mehrere Arten von Federelementen verfügt, nämlich über die, die durch die zusätzlich erfindungsgemäßen elastisch verformbaren Kunststoffteile zwischen Lagerkörper und Achskörper geschaffen werden und die, die zusätzlich durch Verwendung großer elastischer Reifen erzielt werden. Vorzugsweise entspricht der Durchmesser der großen Räder mindestens 3/4 des Abstandes zwischen Trittbrett und Fahrbahn.

## Patentansprüche

1. Rollbrett, insbesondere Tretroller oder Skateboard, mit:
einem Trittbrett und mindestens einer Vorderachse und mindestens einer Hinterachse, an denen jeweils mindestens ein Rad drehbar gelagert ist,
mindestens einem Federelement zum Abfedern von Kräften, die zwischen der mindestens einen Vorderachse oder der mindestens einen Hinterachse und dem Trittbrett wirken,
wobei das Federelement aus einem elastisch verformbaren Kunststoffteil besteht.

2. Rollbrett nach Anspruch 1, **dadurch gekennzeichnet, dass** der elastisch verformbare Kunststoff ein Elastomer ist.

3. Rollbrett nach Anspruch 1 oder 2, **dadurch gekennzeichnet, dass** das elastisch verformbare Kunststoffteil aus einem PUR-Schaum besteht.

4. Rollbrett nach einem der vorhergehenden Ansprüche, **dadurch gekennzeichnet, dass** eine Vorderachse und eine Hinterachse mit jeweils einem, vorzugsweise zwei Rädern vorgesehen ist.

5. Rollbrett nach einem der vorhergehenden Ansprüche, **dadurch gekennzeichnet, dass** jedes Rad an einem Achskörper, bestehend aus Achse und Achslagerteil, drehbar gelagert ist.

6. Rollbrett nach Anspruch 5, **dadurch gekennzeichnet, dass** der Achskörper an einem Befestigungskörper, vorzugsweise Lagerbock, welcher starr mit dem Trittbrett verbunden ist, um eine Achse drehbar befestigt ist.

7. Rollbrett nach einem der Ansprüche 5 oder 6, **dadurch gekennzeichnet, dass** das elastisch verformbare Kunststoffteil zwischen Achskörper und Lagerkörper eingefügt ist, derart, dass das elastisch verformbare Kunststoffelement die axiale Drehung zwischen Lagerkörper und Achskörper dämpft, um dadurch die Federwirkung zu erreichen.

8. Rollbrett nach einem der vorhergehenden Ansprüche, **dadurch gekennzeichnet, dass** das elastisch verformbare Kunststoffteil bezüglich der Radachsenmitte symmetrisch ausgebildet ist, um ein symmetrisches Federverhalten der entsprechenden Achse zu ermöglichen.

9. Rollbrett nach einem der vorherigen Ansprüche, **dadurch gekennzeichnet, dass** das elastisch verformbare Kunststoffteil pro Achse zweiteilig ausgeführt ist.

10. Rollbrett nach Anspruch 9, **dadurch gekennzeichnet, dass** das elastisch verformbare Kunststoffteil pro Achse aus zwei zylinderförmigen Elementen besteht.

11. Rollbrett nach Anspruch 10, **dadurch gekennzeichnet, dass** die zwei zylinderförmigen Teile zueinander V-förmig stehen, wobei sich die weiter beabstandeten Enden gemeinsam an dem Lagerkörper abstützen und sich die zueinander enger stehenden Enden sich gemeinsam an dem Lagerkörper abstützen.

12. Rollbrett nach Anspruch 11, **dadurch gekennzeichnet, dass** die V-förmige Anordnung symmetrisch zur Drehachse zwischen Lagerkörper und Achskörper ausgebildet ist und die entsprechende Drehachse senkrecht auf der durch die V-förmige Anordnung definierten Ebene steht.

13. Rollbrett nach einem der Ansprüche 10 bis 12 , **dadurch gekennzeichnet, dass** die zylinderförmigen Kunststoffteile eine entlang der Zylinderachse verlaufende Bohrung aufweisen.

14. Rollbrett nach einem der Ansprüche 1 bis 8, **dadurch gekennzeichnet, dass** das elastisch verformbare Kunststoffteil einstückig ausgeführt ist.

15. Rollbrett nach Anspruch 14, **dadurch gekennzeichnet, dass** das einstückig ausgeführte elastisch verformbare Kunststoffteil die Form eines Tetraeders aufweist.

16. Rollbrett nach Anspruch 14, **dadurch gekennzeichnet, dass** das einstückig ausgeführte elastisch verformbare Kunststoffteil zylinderförmig ausgeführt ist, wobei die Zylinderachse parallel zur entsprechenden Radachse verläuft.

17. Rollbrett nach einem der Ansprüche 1 bis 16, **dadurch gekennzeichnet, dass** die Drehachse, um die der Achskörper drehbar gegen den Lagerkörper gelagert ist, senkrecht auf der entsprechenden Radachse steht.

18. Rollbrett nach Anspruch 17, **dadurch gekennzeichnet, dass** die Drehachse einen spitzen Winkel, vorzugsweise einen 45° Winkel mit der Längsachse des Trittbretts bildet.

19. Rollbrett nach einem der Ansprüche 2 bis 18, **dadurch gekennzeichnet, dass** die Drehachse, um die sich der Achskörper gegenüber dem Lagerkörper drehen kann, durch eine Schraube gebildet wird.

20. Rollbrett nach einem der Ansprüche 1 bis 19, **dadurch gekennzeichnet, dass** der Achskörper und der Lagerkörper zwei sich berührende Gleitflächen aufweisen, die eine Ebene definieren, die senkrecht auf der Drehachse zwischen Achskörper und Lagerkörper steht.

21. Rollbrett nach einem der Ansprüche 1 bis 20, **dadurch gekennzeichnet, dass** der Achskörper und der Lagerkörper jeweils mindestens eine Aussparung aufweisen, in die das zwischen Achskörper und Lagerkörper eingeführte elastisch verformbare Kunststoffteil eingesetzt wird.

22. Rollbrett nach Anspruch 21, **dadurch gekennzeichnet, dass** das elastisch verformbare Kunststoffteil in in den Aussparungen des Achskörpers und Lagerkörpers unter Spannung gehalten wird, wobei die Spannung über eine Schraubverbindung zwischen Achskörper und Lagerkörper erreicht wird, die gleichzeitig die Drehachse zwischen Achskörper und Lagerkörper definiert.

23. Rollbrett nach einem der Ansprüche 1 bis 22, **dadurch gekennzeichnet, dass** die Federelemente so beschaffen sind, dass sie eine symmetrische Federung in der Hinter- und der Vorderachse bewirken.

24. Rollbrett nach einem der Ansprüche 1 bis 23, **dadurch gekennzeichnet, dass** die Räder in Material und Größe so ausgebildet sind, dass sie eine ausreichende Dämpfung in zur Trittbrettfläche senkrechter Richtung ermöglichen.
